## Europäisches Patentamt
## European Patent Office
## Office européen des brevets

(11) Numéro de publication: **0 095 964**
**B1**

(12) **FASCICULE DE BREVET EUROPEEN**

(45) Date de publication du fascicule du brevet: **20.11.86**

(21) Numéro de dépôt: **83401002.7**

(22) Date de dépôt: **19.05.83**

(51) Int. Cl.⁴: **F 16 B 7/04**

(54) **Collier d'accouplement réalisé par emboutissage et pliage d'un flan.**

(30) Priorité: **28.05.82 FR 8209378**

(43) Date de publication de la demande:
**07.12.83 Bulletin 83/49**

(45) Mention de la délivrance du brevet:
**20.11.86 Bulletin 86/47**

(84) Etats contractants désignés:
**DE GB IT SE**

(56) Documents cités:
**DE-C- 535 696**
**FR-A-2 264 211**

(73) Titulaire: **NACAM Société dite:**
**Route de Blois**
**F-41100 Vendome (FR)**

(72) Inventeur: **Haldric, Bernard**
**15 Rue Charles Lindberg**
**F-41100 Vendome (FR)**

(74) Mandataire: **Polus, Camille et al**
**c/o Cabinet Lavoix 2, Place d'Estienne d'Orves**
**F-75441 Paris Cedex 09 (FR)**

Courier Press, Leamington Spa, England.

## Description

La présente invention concerne les colliers d'accouplement et se rapporte plus particulièrement à un collier d'accouplement d'un tube de direction de véhicule automobile sur un arbre.

D'après FR—A—2 264 211, on connait un collier d'accouplement comportant un corps dans lequel est ménagé un passage pour une pièce à accoupler, des moyens de serrage dudit collier sur la pièce et un organe d'immobilisation du collier par rapport à la pièce, destiné à être engagé dans un évidement de celle-ci.

On connait en outre d'après DE—C—535 696, un collier d'accouplement comportant deux ailes parallèles dans lesquelles sont ménagés des orifices de passage pour une pièce à assembler, lesdites ailes étant reliées entre elles par une partie intermédiaire traversée par une fente réunissant lesdits orifices et formant un passage pour un boulon de serrage, lesdits orifices et ladite fente étant découpés au préalable dans un flan qui est ensuite plié pour obtenir ledit collier.

L'invention vise à créer un collier d'accouplement qui tout en assurant un serrage efficace, sur pratiquement tout le périmètre des pièces à accoupler, soit réalisable par des opérations simples d'emboutissage et de pliage, et puisse être rendu solidaire de l'une des pièces telle qu'un tube de colonne de direction pendant toutes les opérations telles que stockage et manutention précédant le serrage.

Elle a donc pour objet un collier d'accouplement comportant un corps dans lequel est ménagé un passage pour une pièce à accoupler, des moyens de serrage dudit collier sur la pièce et un organe d'immobilisation du collier par rapport à la pièce destiné à être engagé dans un évidement de celle-ci, caractérisé en ce que ledit organe d'immobilisation est constitué par une languette latérale venue de matière avec ledit corps et comportant une portion d'extrémité élargie destinée à être engagée dans une portion élargie correspondante d'une fente ménagée dans ladite pièce à accoupler et formant ainsi un organe d'immobilisation axiale et en rotation dudit collier par rapport à ladite pièce.

L'invention sera mieux comprise à l'aide de la description qui va suivre, donnée uniquement à titre d'exemple et faite en se référant aux dessins annexés, sur lesquels:

— la Fig. 1 est une vue en plan d'un flan à partir duquel est réalisé le collier suivant l'invention;
— la Fig. 2 est une vue de dessus du collier terminé monté sur un tube à assembler;
— la Fig. 3 est une coupe suivant la ligne 3—3 de la Fig. 2;
— la Fig. 4 est une coupe suivant la ligne 4—4 de la Fig. 2;
— la Fig. 5 est une vue extérieure en élévation montrant le logement d'écrou du collier suivant l'invention.

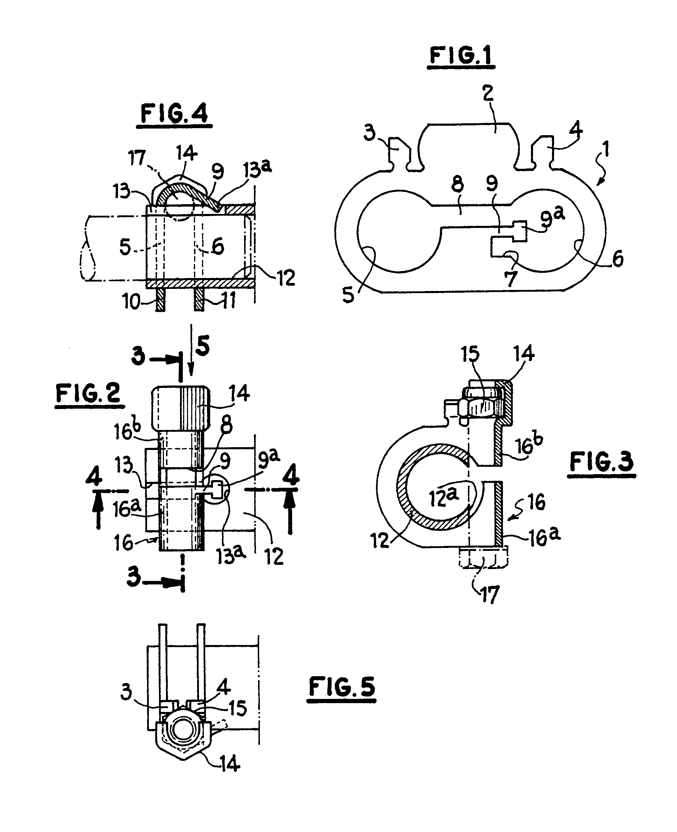

Sur la Fig. 1, on a représenté un flan 1 obtenu par découpe d'une tôle d'épaisseur appropriée, destinée à réaliser par pliage et emboutissage le collier suivant l'invention.

Le flan 1 présente une forme générale rectangulaire à extrémités arrondies. Il comporte sur l'un de ses côtés, une saillie principale 2 disposée au milieu dudit côté et deux pattes 3 et 4 placées symétriquement par rapport à la saillie 2. Le rôle de la saillie 2 et des pattes 3 et 4 sera expliqué par la suite.

A proximité des extrémités arrondies du flan 1 sont ménagés des orifices circulaires 5 et 6 destinés à servir de passages pour l'une des pièces à assembler à l'aide du collier suivant l'invention. Dans le périmètre de l'orifice 6 est ménagée une encoche 7 qui définit avec une fente 8 de liaison des orifices 5 et 6 s'étendant parallèlement à la ligne joignant les centres de ces orifices, une languette 9 dont la fonction sera également expliquée par la suite.

La fente 8 est décalée par rapport à la ligne joignant les centres des orifices 5 et 6 afin de permettre à la languette 9 de présenter cette ligne comme axe de symétrie. La languette 9 présente à son extrémité libre une portion élargie 9a.

Le flan 1 qui vient d'être décrit est réalisé par découpe et emboutissage. Il est ensuite plié pour obtenir le collier représenté aux Fig. 2 à 5.

Le pliage est réalisé autour de l'axe de symétrie du flan 1 perpendiculaire à la ligne joignant les centres des orifices 5 et 6. On obtient ainsi un collier comportant deux ailes 10 et 11 parallèles, la languette 9 constituant un élément d'immobilisation axiale et en rotation du collier par rapport à la pièce sur laquelle il est monté.

Dans l'exemple représenté aux Fig. 2 et 4, cette pièce est constituée par l'extrémité d'un tube 12 dans lequel est ménagée une fente axiale 13 destinée à donner au tube l'élasticité nécessaire à son serrage et utilisée pour recevoir la languette 9. A cet effet, la fente est terminée par un fond circulaire 13a de diamètre supérieur à la largeur de la fente 13, dans lequel est engagée la portion élargie 9a de la languette 9. On voit sur la Fig. 4, que la languette 9 engagée dans la fente 13 assure l'immobilisation axiale et en rotation du collier par rapport au tube 12. Il en résulte que le collier peut être monté sur le tube et constituer avec celui-ci, un ensemble que l'on peut stocker et manipuler avant serrage sans risques de perte du collier.

Bien entendu, au lieu d'utiliser la fente 13, on peut pour immobiliser le collier sur le tube, prévoir dans le tube un logement pour la patte 9 du collier séparé de ladite fente.

Ainsi qu'on peut le voir aux Fig. 2 à 5, la saillie 2 est pliée de manière à constituer un logement 14 pour un écrou 15, tandis que la partie centrale arrondie 16 du collier réunissant les ailes 10 et 11 forme un passage pour un boulon de serrage 17 représenté en trait mixte à la Fig. 3, destiné à coopérer avec l'écrou 15. On voit aussi sur la Fig. 3 que le tube 12 présente une découpe transversale 12a destinée à permettre le passage du boulon 17 qui peut ainsi assurer un clavetage entre le tube 12 et la pièce avec laquelle il doit être accouplé, représentée en trait mixte à la Fig. 4.

La fente 8 réunissant les deux orifices 5 et 6 permet le rapprochement des deux parties 16a et 16b de la partie centrale 16 du collier afin de permettre l'action de serrage du boulon 17 et de l'écrou 15. Les pattes latérales 3 et 4 sont également repliées comme le montre la Fig. 5 pour assurer l'immobilisation de l'écrou 15 dans son logement 14. Cette disposition est particulièrement bien visible à la Fig. 5.

Le logement 14 et les pattes rabattues 3 et 4 constituent en même temps un frein efficace pour l'écrou 15.

On voit que le collier qui vient d'être décrit est d'une réalisation particulièrement simple, car il ne nécessite pour sa fabrication que des opérations de découpe d'emboutissage et de pliage.

En outre, son périmètre de serrage est particulièrement important car il n'est interrompu que par la fente 8 réunissant les orifices 5 et 6 et qui donne au collier, l'élasticité indispensable pour assurer le serrage.

## Revendications

1. Collier d'accouplement comportant un corps dans lequel est ménagé un passage (5, 6) pour une pièce (12) à accoupler, des moyens (8, 15, 17) de serrage dudit collier sur la pièce (12) et un organe d'immobilisation du collier par rapport à la pièce (12) destiné à être engagé dans un évidement (13a) de celle-ci, caractérisé en ce que ledit organe d'immobilisation est constitué par une languette latérale (9) venue de matière avec ledit corps et comportant une portion d'extrémité élargie (9a) destinée à être engagée dans une portion élargie correspondante (13a) d'une fente (13) ménagée dans ladite pièce (12) à accoupler et formant ainsi un organe d'immobilisation axiale et en rotation dudit collier par rapport à ladite pièce (12).

2. Collier suivant la revendication 1, caractérisé en ce qu'il comporte en outre deux pattes latérales (3, 4) réalisées lors de la découpe d'un flan (1), à partir duquel le collier est réalisé, et formant après pliage un frein pour un écrou (15) de serrage dudit collier.

3. Collier suivant l'une des revendications 1 et 2, caractérisé en ce qu'il comporte en outre un logement (14) pour l'écrou de serrage (15) du collier réalisé par pliage d'une saillie latérale (2) formée lors de la découpe du flan (1).

4. Collier suivant les revendications 2 et 3, caractérisé en ce que les deux pattes latérales (3, 4) assurent l'immobilisation dudit écrou (15) dans ledit logement (14).

5. Procédé de fabrication d'un collier suivant l'une quelconque des revendications 1 à 4, comportant deux ailes parallèles (10, 11) dans lesquelles sont ménagés des orifices (5, 6) de passage pour une pièce (12) à assembler, lesdites ailes étant reliées entre elles par une partie intermédiaire (16) traversée par une fente (8) réunissant lesdits orifices (5, 6) et formant un passage pour un boulon de serrage (17), ledit procédé consistant à découper au préalable lesdits orifices (5, 6) et ladite fente (8) les réunissant dans un flan (1) et à plier ledit flan pour former les deux ailes parallèles et étant caractérisé en ce que ladite languette (9) formant organe d'immobilisation axiale et en rotation dudit collier est réalisée par la découpe d'une encoche (7) dans la périphérie de l'un (6) desdits orifices et de la fente (8) reliant lesdits orifices.

6. Procédé suivant la revendication 5, caractérisé en ce que les deux pattes latérales (3, 4) sont réalisées lors de la découpe dudit flan, symétriquement par rapport à la saillie latérale (2) de formation dudit logement (14) de l'écrou (15).

## Patentansprüche

1. Befestigungsschelle, mit einem Körper, in welchem ein Durchlaß (5, 6) für ein anzuschließendes Stück (12) vorgesehen ist, Mitteln (8, 15, 17) zum Anziehen der Schelle an dem Stück (12) und mit einem Element zur Arretierung der Schelle gegenüber dem Stück (12) durch Eingreifen in eine Ausnehmung (13a) desselben, dadurch gekennzeichnet, daß das Arretierungselement aus einer einstückig mit dem Körper gebildeten, sich seitlich erstreckenden Zunge (9) besteht, welche an ihrem Ende einen erweiterten Bereich (9a) für den Eingriff in einen entsprechenden erweiterten Bereich (13a) eines Spalts (13) in dem anzuschließenden Stück (12) aufweist und somit ein Element für die axiale Arretierung sowie gegen Verdrehung gegenüber dem Stück (12) bildet.

2. Befestigungsschelle nach Anspruch 1, dadurch gekennzeichnet, daß diese zwei seitliche Lappen (3, 4) aufweist, welche durch Ausstanzen aus einer Platine (1), aus der die Schelle hergestellt wird, entstehen und nach Umbiegen eine Sicherung für eine Stellmutter (15) der Schelle bilden.

3. Befestigungsschelle nach einem der Ansprüche 1 und 2, dadurch gekennzeichnet, daß diese darüber hinaus eine Aufnahme (14) für eine Stellschraube (15) aufweist, welche durch Umbiegen eines seitlichen Vorsprungs (2) entsteht, der beim Ausstanzen der Platine (1) ausgebildet wird.

4. Befestigungsschelle nach den Ansprüchen 2 und 3, dadurch gekennzeichnet, daß die beiden seitlichen Lappen (3, 4) die Arretierung der Schraube (15) in der Ausnehmung (14) sicherstellen.

5. Verfahren zur Herstellung einer Befestigungsschelle nach einem der Ansprüche 1 bis 4, mit zwei parallelen Flügelelementen (10, 11), in welchen sich zwei Öffnungen (5, 6) zum Hindurchführen eines zu montierenden Stückes (12) befinden, wobei die beiden Flügelelemente zwischen sich ein Stück (16) aufweisen, quer zu welchem ein Spalt (8) verläuft, der die beiden Öffnungen (5, 6) miteinander verbindet und einen Durchlaß für einen Befestigungsbolzen (17) bildet, dadurch gekennzeichnet, daß zunächst die Öffnungen (5, 6) und der sie verbindende Spalt (8) aus einer Platine ausgestanzt werden und die Platine zur Bildung der beiden parallelen Flügelelemente umgebogen wird, und daß die das Element für die axiale Arretierung sowie gegen eine Verdrehung der Befestigungsschelle bildende Zunge (8) dadurch hergestellt wird, daß am Umfang beziehungsweise Rand einer (6) der Öffnungen und des die Öffnungen verbindenden Spalts (8) eine Ausnehmung (7) vorgesehen ist.

6. Verfahren nach Anspruch 5, dadurch gekennzeichnet, daß die beiden seitlichen Lappen (3, 4) bei Ausstanzen der Platine symmetrisch zu dem seitlichen, als Aufnahme (14) für die Schraube (15) dienenden Vorsprung (2) hergestellt werden.

**Claims**

1. Coupling collar comprising a body in which is formed a passage (5, 6) for a part (12) to be coupled, means (8, 15, 17) for clamping said collar on said part (12) and an element for immobilizing the collar relative to the part (12) adapted to be engaged in a cavity (13a) of the part, characterised in that said immobilizing element is constituted by a lateral tongue (9) which is in one piece with said body and comprises an enlarged end portion (9a) adapted to be engaged in a corresponding enlarged portion (13a) of a slot (13) provided in said part (12) to be coupled, and thus forming an element for immobilizing axially and in rotation said collar relative to said part (12).

2. Collar according to claim 1, characterised in that it further comprises two lateral tabs (3, 4) formed when cutting a blank (1) from which the collar is constructed and forming, after folding, a brake for a nut (15) for clamping said collar.

3. Collar according to claim 1 or 2, characterised in that it further comprises a recess (14) for the clamping nut (15) of the collar constructed by bending a lateral projection (2) formed when cutting the blank (1).

4. Collar according to claims 2 and 3, characterised in that the two lateral tabs (3, 4) ensure the immobilization of said nut (15), in said recess (14).

5. Process for manufacturing a collar according to any one of the claims 1 to 4, comprising two parallel wings (10, 11) in which are formed orifices (5, 6) for the passage of a part (12) to be assembled, said wings being interconnected by an intermediate portion (16) through which extends a slot (8) interconnecting said orifices (5, 6) and forming a passage for a clamping bolt (17), said process comprising previously cutting said orifices (5, 6) and said slot (8), uniting them in a blank (1) and folding said blank so as to form the two parallel wings, and being characterised in that said tongue (9) forming the element for immobilizing axially and in rotation said collar is produced by the cutting of a notch (7) in the periphery of one (6) of said orifices and the slot (8) interconnecting said orifices.

6. Process according to claim 5, characterised in that the two lateral tabs (3, 4) are produced when cutting said blank, symmetrically relative to the lateral projection (2) forming said recess (14) for the nut (15).

FIG.1

FIG.4

FIG.2

FIG.3

FIG.5